# EUROPÄISCHE PATENTSCHRIFT

(11) **EP 0 298 360 B1**
(45) Veröffentlichungstag und Bekanntmachung des Hinweises auf die Patenterteilung: **09.03.1994**
(21) Anmeldenummer: 88110374.1
(22) Anmeldetag: 29.06.1988
(51) Int. Cl.: A43B 7/12

(54) **Wasserdichtes Schuhwerk**
Watertight footwear
Chaussure imperméable

(30) Priorität: 08.07.1987 DE 3722589
(43) Veröffentlichungstag der Anmeldung: 11.01.1989
(73) Patentinhaber: W.L. Gore & Associates GmbH, 85636 Putzbrunn (DE)
(72) Erfinder: Bleimhofer, Walter, D-8122 Penzberg (DE); Hübner, Thorger, D-8208 Kolbermoor (DE)
(74) Vertreter: Klunker . Schmitt-Nilson . Hirsch

(56) Entgegenhaltungen:
- EP-A- 0 080 710
- FR-A- 2 576 195

## Beschreibung

Die Erfindung betrifft Schuhwerk gemäß dem Oberbegriff des Anspruchs 1 und ein Verfahren zu dessen Herstellung gemäß dem Oberbegriff des Anspruchs 25.

Aus dem Dokument FR-A-2 576 195 ist ein Schuh bekannt, dessen Schaft über eine Naht mit einer Brandsohle verbunden ist. Die Brandsohle ist durchlässig, so daß beim Anspritzen der Laufsohle flüssiger Kunststoff durch die Brandsohle hindurch gelangen kann. Über der Brandsohle befindet sich eine Zwischensohle, die von einer Deckschicht abgedeckt ist. Die Zwischensohle kann auf ihrer Unterseite mit Verankerungslöchern versehen sein, in welche der flüssige Laufsohlenkunststoff beim Anspritzen der Laufsohle eindringen kann, und zwar durch die durchlässige Brandsohle hindurch. Dies führt zu einer Verankerung zwischen der angespritzten Sohle und der Zwischenschicht. Beim Anspritzvorgang gelangt flüssiger Kunststoff auch auf der Innenseite des Schaftes in den Bereich der Naht. Als Folge davon sind die Innenseite des unteren Schaftendes und die Naht im Kunststoff der Laufsohle versenkt.

Bei einem Schuhwerk dieser vorbekannten Art ist jedoch notwendig eine zweite Innensohle bzw. ein sockenartiger Einsatz erforderlich, wodurch die Produktionskosten erheblich gesteigert werden. Bei einer wasserdichten Ausführung dieses Schuhwerkes muß das Schaftmaterial wasserundurchlässig ausgeführt werden, wodurch Schweißflüssigkeit nicht abgeführt werden kann sondern sich aufstaut, was ein unangenehmes Traggefühl hervorruft.

Es gibt wasserdichtes, jedoch wasserdampfdurchlässiges, mikroporöses Membranmaterial, das im Lauf der letzten Jahre zunehmend für die Herstellung wasserdichter Bekleidungsgegenstände verwendet worden ist. Aufgrund seiner Dampfdurchlässigkeit ergeben sich angenehme Trageigenschaften. Solches Membranmaterial besteht z.B. aus gerecktem Polytetrafluorethylen (üblicherweise und auch hier abgekürzt mit PTFE), aus Polyester oder aus einer mikroporösen Polyurethan-Beschichtung.

In jüngerer Zeit hat man solches Membranmaterial auch für die Herstellung wasserdichten Schuhwerks verwendet. Dabei wird mindestens der Schuhschaft auf der Innenseite mit solchem Membranmaterial ausgekleidet, das in vorliegendem Zusammenhang vorzugsweise als Funktionsschicht bezeichnet wird. Ein Beispiel zeigt die EP-A3-0 080 710. Meist wird die Auskleidung durch ein Futter in Form eines Laminates gebildet, das die Funktionsschicht und auf deren zum Schuhinnenraum gerichteten Seite eine Textilschicht aufweist.

Problematisch sind Nähte, welche infolge des Vernähens des Schuhschaftes mit dem Futter und, falls vorhanden, mit der Brandsohle entstehen.

An den Stichstellen wird die Funktionsschicht durchlöchert und wasserdurchlässig.

Um dieses Problem zu überwinden, hat man schon sockenartige Einsätze zwischen Schaft und Laufsohle bzw. Brandsohle einerseits und einem Innenfutter andererseits verwendet. Da dieser sockenartige Einsatz durch Verschweißen in seine Form gebracht werden kann, braucht er keine Nahtlöcher aufzuweisen. Diese Methode ist jedoch recht aufwendig in der Herstellung, wenn die sockenartigen Einsätze einigermaßen der jeweiligen Schuhform angepaßt sein sollen.

Eine andere bekannte Methode ist die, die Unterseite des Schuhwerks bzw. der Brandsohle und den unteren Bereich des mit der Funktionsschicht ausgekleideten und gegebenenfalls mit der Brandsohle vernähten Schaftes mit einer im allgemeinen die Laufsohle bildenden Kautschuk- oder Kunststoffsohle zu umspritzen. Dabei wird die Verbindungsnaht zwischen Schaft und Futter und gegebenenfalls Brandsohle von der Kautschuk- oder Kunststoffsohle eingeschlossen, also von wasserdichtem Material.

Es sei an dieser Stelle bemerkt, daß im vorliegenden Zusammenhang der Begriff "Kunststoffsohle" als Kurzbegriff verwendet wird und auch Natur- oder Kunstkautschuk umfassen soll.

Der Schaft besteht üblicherweise aus Leder oder einem Textilgewebe, beispielsweise aus Kunstfasern.

Die angespritzte Kunststoffsohle dichtet zwar die Nahtstelle zwischen Funktionsschicht und Schaft und gegebenenfalls Brandsohle gegen das direkte Auftreffen von Wasser ab. Die genannten Schaftmaterialien haben jedoch die Eigenschaft, daß sie Wasser in ihrer Längserstreckung leiten, was besonders stark für Lederschäfte zutrifft. An diesem Leiten von Wasser sind Kapillareffekte beteiligt. Wenn also der nicht von der Kunststoffsohle abgedeckte Schaftbereich naß wird, kriecht das Wasser aufgrund dieses Längsleitungseffektes den Schaft entlang bis zur innerhalb der angespritzten Kunststoffsohle befindlichen Naht, wo es dann an den Nahtlöchern die Funktionsschicht durchdringen kann. Üblicherweise befindet sich die Funktionsschicht innerhalb eines Laminates, das auf der zum Schaft weisenden Seite mit einem Schutztextil und auf der nach innen weisenden Seite mit einem Futtermaterial beschichtet ist. Bei der üblichen Massenherstellung von Schuhen läßt es sich bei wirtschaftlich vertretbarem Aufwand auch kaum vermeiden, daß am unteren Ende von Schaft und Futter Wasserbrücken auftreten. Diese können durch Fäden gegildet werden, die von dem abgschnittenen Futterteil wegstehen und über das abgeschnittene Ende der Funktionsschicht hinüber bis zum Schaftmaterial reichen. Insbesondere dann, wenn das Schaftmaterial aus Textilgewebe besteht, besteht die Gefahr, daß Schaftende und Futterende nicht exakt auf gleicher Höhe abgeschnitten sind, so daß Fäden oder Teile des textilen Schaftmaterials das abgeschnittene Ende der Funktionsschicht überbrücken und eine Feuchtigkeitsbrücke bis zum Futter des Schuhwerks bilden. Das die Funktionsschicht auf der Schuhinnenseite auskleidende Futtermaterial ist üblicherweise saugfähig und wasserleitend. Das entlang des Schaftes eingedrungene und durch die Naht und/oder die genannten Wasserbrücken gelangte Wasser kriecht dann am Futter entlang in das Innere des Schuhs. Erfahrungsgemäß dauert es nur etwa zehn Minuten nach dem Naßwerden der Außenseite des Schuhwerks, bis das Innenfutter naß ist.

Im DE-GM 1 680 553 ist ein Versuch beschrieben, bei Schuhen ohne wasserdichte, wasserdampfdurchlässige Funktionsschicht eine bessere Wasserabdichtung zu erreichen. Der in dieser Druckschrift beschriebene Schuh besitzt einen Sohlenrahmen, der um den Schuhumfang herumlaufend durch einen Umfangsteil einer Brandsohle und einen darauf festgenähten Umfangsbereich des Schaftmaterials gebildet wird. Im Bereich dieses Sohlenrahmens ist das Schaftmaterial auch mit der Brandsohle vernäht.

Mittels dieser Naht ist im Bereich des Sohlenrahmens ein Textilstreifen auf die Oberseite des Schaftmaterials aufgenäht. Zweck dieses Textilstreifens ist es, zu einer besseren Haftfestigkeit der an die Brandsohle und den Sohlenrahmen angespritzen Kunststoffsohle zu kommen. Denn die Oberseite des Schaftmaterials besteht oft aus Material, an dem das Kunststoffsohlenmaterial nur schlecht haftet, so daß zwischen Schaftaußenseite und schlecht haftender Kunststoffsohle Wasser eindringen kann. Durch den Textilstreifen mag zwar erreicht sein, daß die Kunststoffsohle besser auf der Oberseite des Sohlenrahmens haftet. Dadurch sind aber keinerlei Verbesserungen gegen ein Kriechen von Wasser im Schaftmaterial aufgrund der genannten Kapillareffekte erreicht. Im Gegenteil, das stark wasserleitende Textilmaterial erleichtert das Kriechen von Wasser.
Wäre der aus der genannten Druckschrift bekannte Schuh mit einer wasserdichten, wasserdampfdurchlässigen Funktionsschicht ausgekleidet, die dann in üblicher Weise im Bereich des Sohlenrahmens zwischen Schaftmaterial und Brandsohle mit festgenäht wäre, wären Wasserbrücken durch Fäden oder Textilteile des Schaftmaterials und/oder des die Funktionsschicht auskleidenden Innenfutters, welche das abgeschnittene Ende der Funktionsschicht überbrücken können, nicht zu verhindern. Im Gegenteil, durch die Verwendung des Textilstreifens zum besseren Haften des Kunststoffsohlenmaterials ist die Wahrscheinlichkeit, daß es zu solchen Wasserbrücken infolge von Fäden oder Textilstücken kommt, erhöht. Hinzu kommt, daß zwar beim Anspritzen der Kunststoffsohle flüssiges Kunststoffsohlenmaterial in gewissem Ausmaß in die Nahtlöcher des Sohlenrahmens eindringen kann. Die Chancen, daß Kunststoffsohlenmaterial so tief in die Nahtlöcher eindringt, daß es auch die Nahtlöcher einer - bei der genannten Druckschrift nicht vorgesehenen - Funktionsschicht durchdringt, sind aufgrund der Abdeckung des Schaftmaterials mit dem Textilstreifen geringer geworden als ohne einen solchen Textilstreifen. Die Gefahr, daß Wasser das Schaftmaterial entlang nach unten kriecht und unter Überwindung der Nahtlöcher der Funktionsschicht zum Innenfutter des Schuhwerkes gelangt, ist somit höher als ohne die Verwendung des Textilstreifens.

Aufgabe der Erfindung ist es, ein Schuhwerk nach dem Oberbegriff des Patentanspruchs 1 sowie ein Verfahren zu seiner Herstellung vorzusehen, wobei das Schuhwerk so beschaffen ist, daß Wasserbrücken vom Schaft zum Innenfutter vermieden und die Produktionskosten gesenkt werden.

Diese Aufgabe wird erfindungsgemäß gelöst durch ein Schuhwerk nach den Merkmalen im Kennzeichenteil des Patentanspruches 1 sowie durch das dem Patentanspruch 25 entnehmbare Verfahren zur Herstellung erfindungsgemäßen Schuhwerkes.

Den Unteransprüchen 2 bis 24 sowie 26 und 27 sind vorteilhafte Weiterbildungen der Gegenstände derjenigen Patentansprüche, auf die sie jeweils rückbezogen sind, entnehmbar.

Dadurch, daß erfindungsgemäß der an die Laufsohle angrenzende untere Schaftbereich durch poröses Verbindungsmaterial gebildet ist (was im vorliegenden Zusammenhang perforiertes, poröses, löchriges und maschenartiges Material umfassen soll), kann das flüssige Material der Kunststoffsohle beim Anspritzen an den Schaft und gegebenenfalls an die Brandsohle durch den unteren Schaftbereich hindurch bis zur Funktionsschicht bzw. dem die Funktionsschicht aufweisenden Laminat gelangen. Dadurch wird erreicht, daß das angespritzte Kunststoffsohlenmaterial die Nahtlöcher der Verbindungsnaht zwischen Brandsohle, Funktionsschicht und Schaft und gegebenenfalls Brandsohle abdichtet.

Bei einer besonders bevorzugten Ausführungsform wird zwischen der Funktionsschicht (mit welchem Begriff im vorliegenden Zusammenhang auch ein die Funktionsschicht aufweisendes Laminat mitumfaßt sein soll) und dem unteren Schaftbereich ein Abstandshalter angeordnet, der eine gute Durchlässigkeit für das flüssige Kunststoffsohlenmaterial aufweist. Damit wird verhindert, daß undurchlässige Teile des Verbindungsmaterials Nahtlöcher abdecken und den Zutritt von flüssigem Kunststoffsohlenmaterial zu den Nahtlöchern erschweren oder verhindern. Denn bei dem Anspritzen der Kunststoffsohle werden Drücke im Bereich von 5 at verwendet, wodurch das Schaftmaterial und das Verbindungsmaterial mit relativ hohem Druck gegen die Funktionsschicht gedrückt werden.

Erfindungsgemäß wird derart vorgegangen, den Schaft oberhalb Futter- und gegebenenfalls Brandsohlen-Verbindungsnaht aufhören zu lassen und den Abstand zwischen dem unteren Ende des Schaftes und der Nahtstelle mit dem porosen Verbindungsmaterial zu überbrücken. Dabei wird das poröse Verbindungsmaterial einen Endes mit dem unteren Endes des eigentlichen Schaftmaterials vernäht, ohne an dieser Stelle mit der Funktionsschicht vernäht zu werden. Anderen Endes wird das poröse Verbindungsmaterial zusammen mit der Funktionsschicht an der Brandsohle festgenäht. Dadurch werden auch letzte Wasserbrücken, die bei im unteren Bereich perforiertem Schaftmaterial über das übrig gebliebene Schaftmaterial noch in verringertem Ausmaß bestehen könnten, gänzlich vermieden.

Bei letzterer Lösung kann das poröse Verbindungsmaterial gleichzeitig als Abstandshalter ausgebildet sein, beispielsweise als Kunstfaser-Netzwerk mit Maschenöffnungen von mindestens im Bereich von 1,5 mm. Wenn das Netzwerk keine ausreichende Eigensteifigkeit aufweist, kann es mit einem Klebstoff versehen und dadurch ausreichend steif gemacht werden.

Wenn das poröse Verbindungsmaterial als Netzwerk ausgebildet ist, sollten für das Netzwerk monofile Netzfasern vewendet werden. Bei Verwendung multifilen Netzmaterials besteht die Gefahr, daß sich zwischen den einzelnen Fasern wasserleitende Kapillaren bilden können. Während Kapillaren eines monofilen Netzes durch das Anspritzen von flüssigem Kunststoffsohlenmaterial abgedichtet werden, bleiben Kapillaren zwischen multifilen Netzfasern ohne Abdichtung und können auch nach dem Anspritzen von Kunststoffsohlenmaterial Wasser leiten.

Das poröse Verbindungsmaterial kann bis über die Oberkante der angespritzten Kunststoffsohle hinaus reichen. Damit erreicht man eine Entwässerungsfunktion. Wenn Wasser im oberen Schaftbereich zwischen den Schaft und die Funktionsschicht gelangt, beispielsweise weil der Träger des Schuhwerks durch Wasser läuft, kann dieses Wasser über den oberhalb der Kunststoffsohle liegenden Teil des porösen Verbindungsmaterials ablaufen.

Man kann auch einen oberhalb der Funktionsschicht- und gegebenenfalls Brandsohlennaht befindlichen und vorzugsweise bis zur Sohlenoberkante reichenden Bereich der Kunststoffsohle perforieren, um in diesem Sohlenbereich eine Wasserablaufmöglichkeit zu erhalten. Dies hat den Vorteil, daß die Entwässerung bis dicht über die mit dem Sohlenmaterial abgedichtete Funktionsschicht- und gegebenenfalls Brandsohlennaht erfolgen kann.

Eine weitere vorteilhafte Möglichkeit besteht darin, sowohl das Schaftmaterial als auch die Kunststoffsohle im Bereich oberhalb der Funktionsschicht- und gegebenenfalls Brandsohlen-Naht zu perforieren. Dies führt zu einer optimalen Entwässerungsfunktion für in das Schaftmaterial und zwischen Schaft und Funktionsschicht gelangtes Wasser.

Durch die Verwendung eines Abstandshalters zwischen dem unteren Schaftbereich und der Funktionsschicht wird auch erreicht, daß das Material der Kunststoffsohle in dem Zwischenraum zwischen Schaft und Funktionsschicht bzw. Laminatfutter ausreichend hoch steigt, möglicherweise bis über die Oberkante der angespritzten Kunststoffsohle. Damit wird praktisch ausgeschaltet, daß mögliche Risskanäle in dem Material der Kunststoffsohle Feuchtigkeitsleitkanäle bis zur Nahtstelle bilden.

Die Erfindung eignet sich gleichermaßen für Schuhe mit Brandsohle, für Schuhe ohne Brandsohle und für Schuhe, die gemäß der Polypintch-Methode nur im vorderen Schuhteil mit einer Brandsohle versehen sind.

Bei einem Schuh mit durchgängiger Brandsohle sind die unteren Endbereiche von Schaft und die Funktionsschicht enthaltendem Futter an dem Außenumfang der Brandsohle festgenäht, wobei die Endbereiche von Schaft und Futter senkrecht zur Längserstreckungsebene der Brandsohle gerichtet sind. Die Kunststoffsohle ist von unten an die Brandsohle und von unten und seitlich an den unteren Schaftbereich angespritzt.

Bei einem Schuh ohne Brandsohle, der nach dem String-Lasting-Verfahren hergestellt ist, sind die unteren Enden von Schaft und die Funktionsschicht enthaltendem Futter mit Führungsschlaufen zusammengehalten, in denen eine Zugschnur zur Ausführung des String-Lasting-Verfahrens geführt ist. Dabei können Futter und Schaft mit Hilfe der Führungsschlaufen aneinander befestigt sein und/oder mittels einer von den Führungsschlaufen abliegenden Naht. Zur Herstellung eines Schuhs nach diesem Verfahren werden das untere Schaftende mit dem porösen Verbindungsmaterial und das daran befestigte Futter um einen Leisten herumgelegt und an der Unterseite des Leistens mit Hilfe der durch die Führungsschlaufen laufenden Zugschnur um den Leisten herum zusammengezogen. An der Unterseite des Leistens befindet sich ein Trennmittel, welches das Haften von Kunststoffsohlenmaterial an der Leistenunterseite verhindert. Die Laufsohle wird nun von unten an den Leisten bzw. den die Unterseite des Leistens teilweise abdeckenden Schaftbereich so angespritzt, daß sie den unteren Teil des an den Leistenseiten anliegenden Schaftbereichs abdeckt.

Bei diesen Schuhen wird mit Hilfe des porösen Verbindungsmaterials, das die Verbindung zwischen dem eigentlichen Schaftteil und dem mit den Führungsschlaufen versehenen Schaftende darstellt, eine Wasserbrücke vom eigentlichen Schaftteil über das mit den Führungsschlaufen versehene Schaftende hinweg bis zum Innenfutter vermieden. Bei dieser Schuhart ist die Gefahr einer die Funktionsschicht überwindenden Wasserbrücke besonders hoch, weil die Führungsschlaufen üblicherweise aus Fäden hergestellt werden, die Wasser leiten und eine solche Wasserbrücke bilden könnten, wenn das poröse Verbindungsmaterial nicht vorhanden wäre.

Die vorliegende Erfindung eignet sich auch für Schuhe, die nach der Polypintch-Methode hergestellt sind. Dabei ist nur der vordere, etwa bis zum medialen Gewölbe reichende Teil des Schuhwerks mit einer Brandsohle versehen, während der restliche Teil des Schuhwerks keine Brandsohle aufweist. Im Bereich der Brandsohle sind der untere Bereich von Schaft und damit vernähtem Futter um den unteren Rand der Brandsohle herumgeschlagen. In dem Bereich ohne Brandsohle sind die unteren Bereiche von Schaft und damit vernähtem Futter senkrecht zur Laufsohlenebene gerichtet. Mindestens in dem Bereich ohne Brandsohle ist der Leisten wieder mit einem Trennmittel versehen, das verhindert, daß das flüssige Kunststoffsohlenmaterial am Leisten festklebt. Zur Herstellung der Laufsohle wird flüssiges Kunststoffmaterial von unten an die Brandsohle bzw. den Leisten so angespritzt, daß das Kunststoffmaterial auch noch die Seiten des Schaftes bis zu einer bestimmten Höhe abdeckt. Auch hierbei verhindert das poröse Verbindungsmaterial am unteren Schaftende, daß eine Wasserbrücke vom eigentlichen Schaftmaterial um die Funktionsschicht herum bis zum Futter gebildet wird.

Die Erfindung wird nun anhand von Ausführungsformen näher erläutert. Die schematischen Schuh-Darstellungen zeigen:
- Fig. 1: einen Schuh bekannter Art;
- Fig. 2: einen Schuh gemäß einer ersten Ausführungsform der Erfindung;
- Fig. 3: einen Querschnitt durch einen Schuh, der mit Hilfe des String-Lasting-Verfahrens hergegestellt ist;
- Fig. 4: eine Unteransicht eines derartigen String-Lasting-Schuhs;
- Fig. 5: eine Unteransicht eines nach der Polypintch-Methode hergestellten Schuhs;
- Fig. 6: einen Querschnitt längs der Schnittlinie 1-1 in Fig. 5; und
- Fig. 7: einen Querschnitt längs der Schnittlinie 2-2 in Fig. 5.

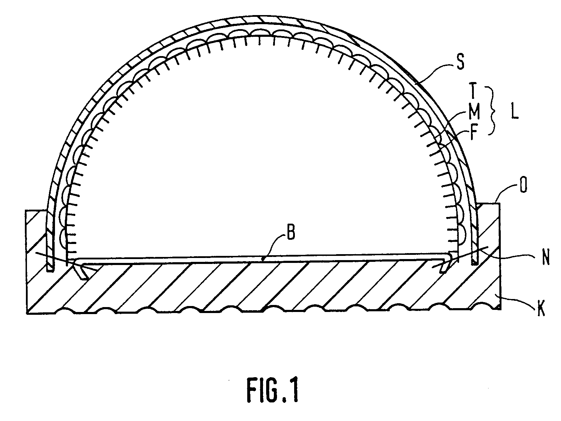

Gemäß Figur 1 weist ein Schuh bekannter Art einen Schaft S auf, der beispielsweise aus Leder oder einem Textilgewebe, vorzugsweise aus Kunststoff, besteht. Die Innenseite des Schaftes S ist mit einem Laminat L ausgekleidet, das die Funktion eines Innenfutters übernimmt und eine wasserdichte und wasserdampfdurchlässige Funktionsschicht oder Membran M aufweist, die auf der zum Schaft S weisenden Seite mit einem Textil T und auf der zum Schuhinnenraum weisenden Seite mit Futtermaterial F ausgekleidet ist. Das Futtermaterial F und das Textilgewebe T bilden einen mechanischen Schutz für die Funktionsschicht M. An seinem unteren Ende ist der Verbund aus Schaft S und Laminat L mit dem Rand einer Brandsohle B vernäht und die Naht ist mit N bezeichnet. An die Unterseite der Brandsohle B und den damit vernähten unteren Bereich des Schaftes S ist eine Sohle K aus irgendeinem geeigneten wasserdichten Kunststoff angespritzt. Die Oberkante O der Sohle K liegt so hoch, daß die Naht N von der Sohle K umschlossen ist. Die Naht N ist somit gegenüber direkt auftreffendem Wasser abgedichtet.

Wasser, das auf den außerhalb der Sohle K liegenden Bereich des Schaftes S auftrifft, kann jedoch entlang des Schaftes an der Innenseite der Sohle K bis zur Naht gelangen, dort die Nahtlöcher in der Funktionsschicht M durchdringen und in den Innenraum des Schuhs gelangen.

Es besteht auch die Gefahr, daß
beim Schneiden des Schaftmaterials und des mindestens eine Textilschicht aufweisenden Futters L Fäden oder Textilteile überstehen bleiben, welche die Funktionsschicht F des Futters L überbrückend eine Verbindung zwischen Schaft S und Futtermaterial F bilden. Wenn der Schaft S naß wird, und Wasser bis herab zum Schaftende leitet, kann dies über diese Wasserbrücke hinweg bis zum Futtermaterial F gelangen, so daß das Futtermaterial F naß wird.

Dies ist bei den im folgenden betrachteten Ausführungsformen der Erfindung verhindert.

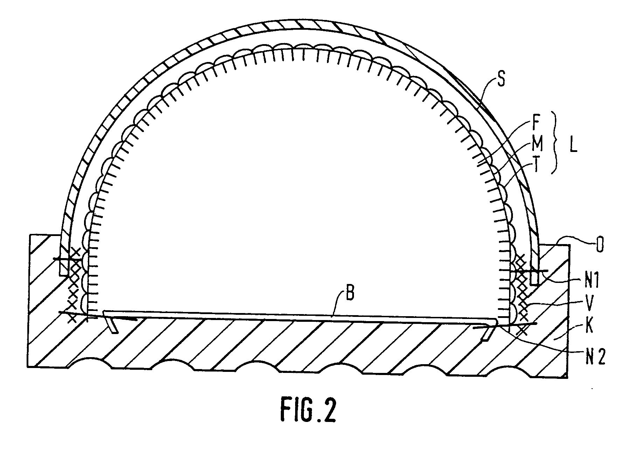

Bei der in Figur 2 gezeigten Ausführungsform der Erfindung reicht der Schaft S nicht hinab bis zur Brandsohle B sondern das untere Schaftende weist einen Abstand zum Brandsohlenrand auf. Dieser Abstand ist mit einem löchrigen oder porösen Verbindungsmaterial V überbrückt. Der obere Rand des Verbindungsmaterials V ist am unteren Rand des Schaftes S festgenäht, und zwar bei einer Naht N1. Das Laminat L ist an dieser Stelle jedoch nicht mit dem Schaft vernäht. Das andere Ende des Verbindungsmaterials V ist zusammen mit dem unteren Ende des Laminats L mit der Brandsohle B vernäht, und zwar bei einer Naht N2.

Beim Anspritzen der Sohle K gelangt flüssiges Sohlenmaterial durch die Poren oder Löcher oder Maschen des Verbindungsmaterials V hindurch auf die Außenseite des Laminats L , wodurch die Nahtlöcher der Naht N2 mit dem Sohlenkunststoff abgedichtet werden.

Dadurch, daß der untere Schaftbereich durch an den eigentlichen Schaft angesetztes löchriges oder poröses Verbindungsmaterial V gebildet ist, kann vom eigentlichen Schaft geleitetes Wasser nicht bis zum Bereich der Schaft, Futter und Brandsohle verbindenden Naht gelangen, so daß sich selbst Wasserbrücken, die durch die Naht und durch die Funktionsschicht überbrückende Fäden oder Textilstücke gebildet werden, nicht auswirken können, weil das vom eigentliche Schaft geleitete Wasser nicht bis zu ihnen gelangen kann.

Zwischen das poröse Verbindungsmaterial und das Laminat L kann ein durchlöcherter oder poröser Abstandshalter eingefügt werden. Dieser hält das Laminat und das poröse Verbindungsmaterial V in einem Abstand voneinander und ist beim Anspritzen der Sohle K vom flüssigen Kunststoffsohlenmaterial durchdringbar. Infolge des Abstandhalters kann mehr Kunststoffsohlenmaterial zwischen den Schaft und das Laminat gelangen. Außerdem kann bei Verwendung des Abstandshalters das angespritzte Kunststoffmaterial in einen höheren Bereich zwischen Schaft S und Laminat L aufsteigen, als es ohne Abstandshalter möglich wäre. Denn aufgrund des hohen Spritzdruckes beim Anspritzen der Sohle K muß die Dichtlippe der Spritzform im Bereich der Oberkante O der Sohle K mit entsprechend hohem Druck an den Schaft gedrückt werden. Ohne den Abstandshalter würde nur entsprechend weniger Kunststoffmaterial zwischen Schaft S und Laminat L gelangen können. Mehr Material in diesem Zwischenraum erhöht die Wahrscheinlichkeit, daß Risskanäle im Kunststoffmaterial nicht zu Feuchtigkeitskanälen werden.

Ist ein Abstandhalter vorgesehen, kann dieser bis über die Oberkante der Sohle K hinausragen. Man kann sogar den gesamten Schaft S mit dem Abstandshalter auskleiden, was dem Schuh mehr Gesamtstabilität verleihen und einfache Herstellungsvorgänge ermöglichen kann.

Bevorzugte Materialien für die Sohle K sind Polyurethan (PU), Polyvinylchlorid (PVC) und transparenter Kautschuk (TR).

Für das Verbindungsmaterial und den Abstandshalter kann ein Netzmaterial verwendet werden, das einerseits vernähbar ist und andererseits beim Anspritzen für das flüssige Kunststoffsohlenmaterial durchlässig ist. Ein bevorzugtes Material ist Kunstfaser in Netzform mit einer Maschengröße von vorzugsweise mindestens etwa 1,5 mm. Das Verbindungsmaterial und der Abstandhalter sollte vorzugsweiswe aus monofilem Material bestehen, um wasserleitfähige und vom Kunststoffmaterial beim Anspritzen nicht abdichtbare Fibrillen-Kanäle zu vermeiden, wie sie in multifilem Material auftreten. Als Kunstfasermaterial eignen sich z.B. Polyamid und Polyester. Das Material des Verbindungsmaterials und des Abstandshalters kann mit Klebstoff beschichtet sein, um dessen Steifigkeit und Standfestigkeit zu erhöhen.

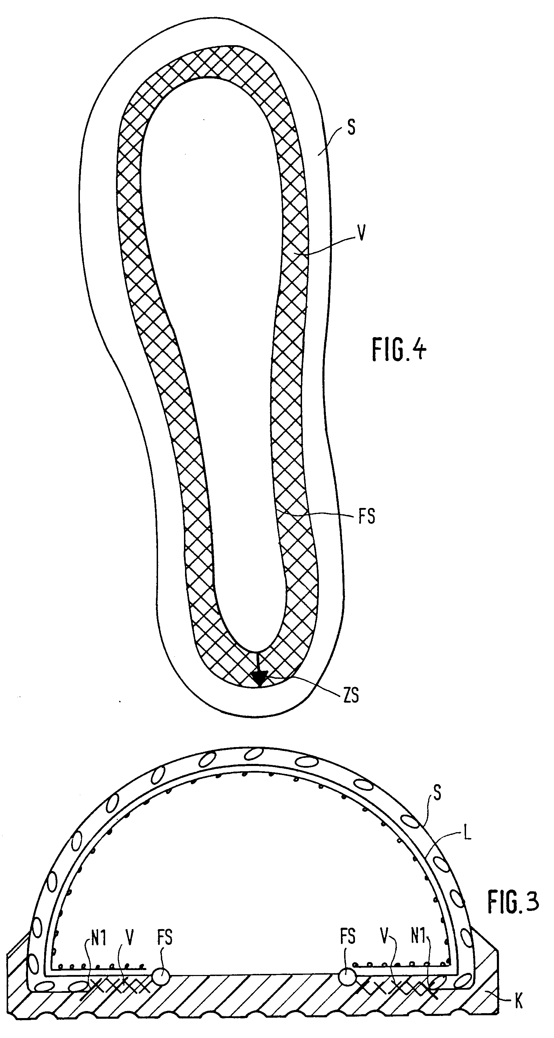

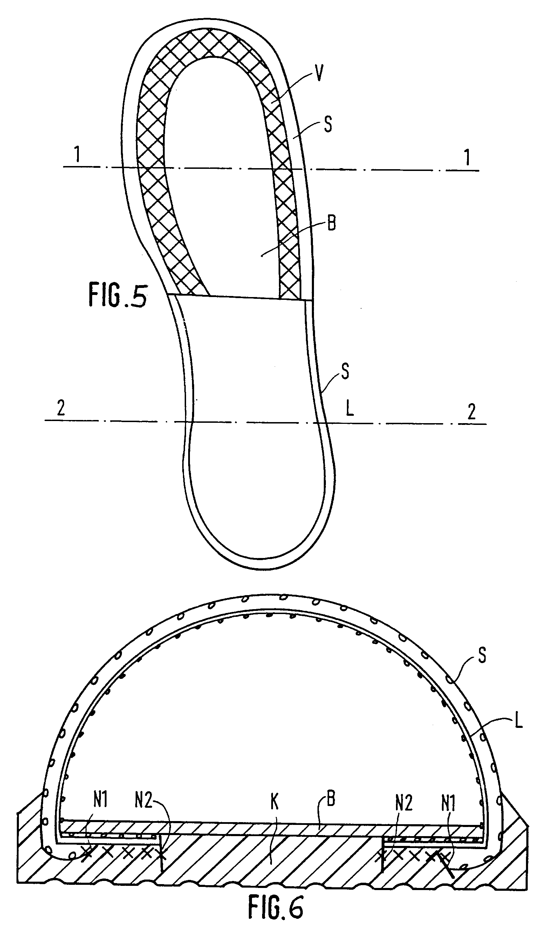

Die Fig. 3 und 4 zeigen eine erfindungsgemäße Ausführungsform eines nach der String-Lasting-Methode hergestellten Schuhes. Dabei zeigt die Fig. 3 eine Querschnittsansicht, während Fig. 4 eine Unteransicht vor dem Aufbringen der Kunststoffsohle K darstellt.

Bei dieser Herstellungsmethode wird das löchrige oder poröse Verbindungsmaterial V am unteren Ende des Schaftes mit Hilfe einer Naht N1 festgenäht. Das Verbindungsmaterial V und das die Funktionsschicht enthaltende Futter L werden an ihrem freien Ende vernäht, und zwar vorzugsweise mit Hilfe der Führungsschlaufen FS. Durch die Führungsschlaufen läuft eine Zugschnur ZS. Vor dem Anspritzen der Kunststoffsohle K werden der Schaft S und das Futter L um einen Leisten herumgelegt und dann werden die unteren Endbereiche von Schaft S und Futter L mit Hilfe der Zugschnur ZS zusammengezogen, bis der gesamte Schaft S mit dem ihn auskleidenden Futter L im wesentlichen am Leisten anliegt. Danach wird die Kunststoffsohle K von unten angespritzt, wobei die Unterseite des Leistens mit einem Trennmittel versehen ist. Nach dem Abnehmen vom Leisten werden der untere Bereich des Futters F und der dazwischen liegende Bereich der Kunststoffsohle K mit einer Abdecksohle ausgekleidet.

Auch bei dieser Ausführungsform könnte man zwischen das Verbindungsmaterial V und das Futter F einen Abstandshalter einfügen.

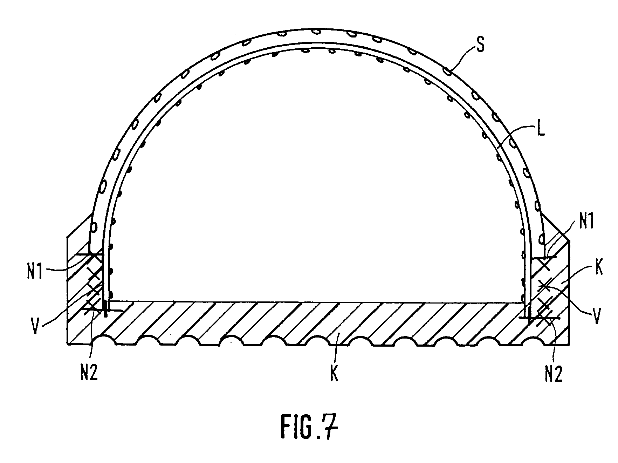

Die Fig. 5 bis 7 zeigen die Anwendung der Erfindung bei einem nach der Polypintch-Methode hergestellten Schuh. Fig. 5 zeigt eine Unteransicht eines solchen Schuhs vor dem Anspritzen der Kunststoffsohle. Die Fig. 6 und 7 zeigen Querschnitte durch diesen Schuh längs den Querschnittlinien 1-1 bzw. 2-2, allerdings nach dem Anspritzen der Kunststoffsohle.

Im Bereich einer Brandsohle B, die vom vorderen Ende des Schuhs bis zum medialen Gewölbe des Fußes reicht, sind die unteren Bereiche von Schaft S und Futter L um den unteren Rand der Brandsohle B herumgeschlagen. Im hinteren Bereich des Schuhes, der keine Brandsohle aufweist, sind die unteren Enden von Schaft S und Futter L senkrecht zur Laufsohlenebene gerichtet. Im Bereich der Brandsohle B befindet sich das das Schaftmaterial verlängernde Verbindungsmaterial V unterhalb der Brandsohle. Im Bereich ohne Brandsohle befindet sich das Verbindungsmaterial V im unteren Seitenbereich des Schaftes S. Die Kunststoffsohle wird im Bereich der Brandsohle an die Brandsohlenunterseite und den unter die Brandsohle geschlagenen Bereich des Schaftes angespritzt und in dem Bereich außerhalb der Brandsohle an den mit einem Trennmittel versehenen Leisten. Nach dem Abnehmen des Schuhs vom Leisten wird dieser mit einer Decksohle ausgekleidet.

Bei nach der Polypintch-Methode hergestellten Schuhen mit wasserdichter, wasserdampfdurchlässiger Funktionsschicht besteht das Problem, daß es bei normalen Herstellungsmethoden kaum möglich ist, Schaftmaterial an der Trennstelle zwischen Brandsohle und Nicht-Brandsohle so exakt gleichmäßig abzuschneiden, daß nicht textiles Schaftmaterial oder textiles Futtermaterial oder Fäden davon über das abgeschnittene Ende der Funktionsschicht hinwegstehen und dort eine Wasserbrücke bilden. Dadurch, daß der untere Endbereich des Schaftes durch ein an den Schaft S angesetztes Verbindungsmaterial V gebildet ist, kann die durch das Material des eigentlichen Schaftes S gebildete Wasserleitstrecke nicht bis zum Schnittende des Futters und damit der Funktionsschicht fortgesetzt werden, so daß sich an sich bestehende Wasserbrücken über Nahtlöcher und über das Schnittende der Funktionsschicht überbrückende Fäden und Textilstücke nicht auswirken können.

## Patentansprüche

1. Schuhwerk mit
(a) einem Schaft (S),
(b) einem den Schaft (S) auskleidenden Futter (L),
(c) einer an den unteren Bereich des Schaftes (S) angespritzten wasserdichten Kunststoffsohle,
(d) wobei der im Laufsohlenbereich befindliche untere Schaftbereich über eine Naht (N₂) mit einem porösen Material (V) vernäht ist, das vom beim Anspritzen flüssigen Kunststoffsohlenmaterial durchdringbar ist,
**dadurch gekennzeichnet,**
(e) daß das Futter (L) mit einer wasserdichten und wasserdampfdurchlässigen mikroporösen Funktionsschicht (M) versehen ist,
(f) daß das eigentliche Schaftmaterial in einem Abstand vom unteren Ende des Futters (L) endet und
(g) daß das Ende des eigentlichen Schaftmaterials über ein poröses, Verbindungsmaterial (V) mit dem unteren Ende des Futters (L) verbunden ist,
(h) wobei das poröse Verbindungsmaterial (V) einen Endes mit dem eigentlichen Schaftmaterial (S) mit einer Naht (N1), nicht jedoch mit dem Futter (L), und anderen Endes mit dem Futter (L) über die Naht (N₂) vernäht ist.

2. Schuhwerk nach Anspruch 1, **dadurch gekennzeichnet**, daß mindestens im Bereich der Schaft (S) und Futter (L) verbindenden Naht (N2) zwischen Schaft (S) und Futter (L) ein poröser, von dem beim Anspritzen flüssigen Kunststoffsohlenmaterial durchdringbarer Abstandshalter (A) befestigt ist.

3. Schuhwerk nach Anspruch 2, **dadurch gekennzeichnet**, daß der Abstandshalter (A) mindestens mittels der Schaft (S) und Futter (L) verbindenden Naht (N2) befestigt ist.

4. Schuhwerk nach mindestens einem der Ansprüche 1 bis 3, **dadurch gekennzeichnet**, daß das poröse Verbindungsmaterial (V) zusätzlich als Abstandshalter ausgebildet ist.

5. Schuhwerk nach mindestens einem der Ansprüche 1 bis 4, **dadurch gekennzeichnet**, daß das poröse Verbindungsmaterial (V) vom unteren Ende des Futters (L) aus bis über den oberen Rand der Kunststoffsohle (K) hinausreicht.

6. Schuhwerk nach mindestens einem der Ansprüche 1 bis 5, **dadurch gekennzeichnet**, daß die Kunststoffsohle (K) wasserdampfdurchlässig ist.

7. Schuhwerk nach mindestens einem der Ansprüche 1 bis 6, **dadurch gekennzeichnet**, daß das Material der Kunststoffsohle (K) aus Polyurethan, transparentem Kautschuk und Polyvinylchlorid ausgewählt ist.

8. Schuhwerk nach mindestens einem der Ansprüche 1 bis 7, **dadurch gekennzeichnet**, daß das Futter durch ein Laminat (L) gebildet ist, das eine wasserdichte und wasserdampfdurchlässige mikroporöse Funktionsschicht (M) aufweist, deren zum Schaftmaterial weisende Seite mit einer mechanisch schützenden Textilschicht (T) und deren zum Innenraum des Schuhwerks weisende Seite mit einer mechanisch schützenden, wahlweise wärmenden Futterschicht (F) versehen ist.

9. Schuhwerk nach mindestens einem der Ansprüche 1 bis 8, **dadurch gekennzeichnet**, daß die Funktionsschicht (M) aus einer Membran aus gerecktem Polytetrafluorethylen, aus Polyester oder aus einer mikroporösen Polyurethan-Beschichtung besteht.

10. Schuhwerk nach mindestens einem der Ansprüche 1 bis 9, **dadurch gekennzeichnet**, daß der Schaft (S) aus einem Stoff- oder Kunststoffgewebe besteht.

11. Schuhwerk nach mindestens einem der Ansprüche 1 bis 10, **dadurch gekennzeichnet**, daß der Schaft (S) aus Leder besteht.

12. Schuhwerk nach mindestens einem der Ansprüche 1 bis 11, **dadurch gekennzeichnet**, daß das den Schaft (S) mit dem Ende des Futters (L) verbindende poröse Verbindungsmaterial (V) ein Netz aus monofilen Kunstfasern ist.

13. Schuhwerk nach Anspruch 12, **dadurch gekennzeichnet**, daß die Maschenöffnungsgröße mindestens im Bereich von etwa 1,5 mm liegt.

14. Schuhwerk nach Anspruch 12 oder 13, **dadurch gekennzeichnet**, daß das Material des Netzes aus Polyamid und Polyester ausgewählt ist.

15. Schuhwerk nach mindestens einem der Ansprüche 12 bis 14, **dadurch gekennzeichnet**, daß das Netz mit einem es versteifenden Klebstoff versehen ist.

16. Schuhwerk nach mindestens einem der Ansprüche 1 bis 15, **dadurch gekennzeichnet**, daß der untere Endbereich des Schaftes (S) und des Futters (L) im wesentlichen senkrecht zur Laufsohlenunterseite gerichtet sind.

17. Schuhwerk nach mindestens einem der Ansprüche 1 bis 13, **dadurch gekennzeichnet**, daß der untere Endbereich des Schaftes (S) und des Futters (L) im wesentlichen parallel zur Laufsohlenunterseite gerichtet sind und mindestens der parallel zur Laufsohlenunterseite verlaufende Bereich des Schaftes (S) durch ein poröses Verbindungsmaterial (V) gebildet ist.

18. Schuhwerk nach mindestens einem der Ansprüche 1 bis 17, **dadurch gekennzeichnet**, daß der untere Endbereich des Verbindungsmaterials (V) und des Futters (L) mit einer Brandsohle (B) vernäht sind, an deren Unterseite die Laufsohle (K) angespritzt ist.

19. Schuhwerk nach Anspruch 18, **dadurch gekennzeichnet**, daß sich die Brandsohle (B) nach Art der Polypintch-Methode nur über einen Teil der Länge des Schuhwerks erstreckt.

20. Schuhwerk nach Anspruch 19, **dadurch gekennzeichnet**, daß sich die Brandsohle (B) vom vorderen Ende des Schuhwerks bis etwa zu dessen medialem Gewölbe erstreckt.

21. Schuhwerk nach Anspruch 19 oder 20, **dadurch gekennzeichnet**, daß der untere Endbereich des Verbindungsmaterials (V) und des Futters (L) in dem nicht mit Brandsohle (B) versehenen Bereich des Schuhwerks gemäß Anspruch 16 und in dem mit Brandsohle (B) versehenen Bereich gemäß Anspruch 17 gerichtet ist.

22. Schuhwerk nach mindestens einem der Ansprüche 1 bis 15 oder 17, **dadurch gekennzeichnet**, daß der untere Endbereich des Verbindungsmaterials (V) und des Futters (L) nach Art der String-Lasting-Methode eingeschlagen und an ihrem eingeschlagenen Ende mit Führungsschlingen (FS) für eine Zugschnur (ZS) versehen sind.

23. Schuhwerk nach Anspruch 22, **dadurch gekennzeichnet**, daß die eingeschlagenen Enden von Verbindungsmaterial (V) und Futter (L) mittels der Führungsschlaufen (FS) aneinandergenäht sind.

24. Schuhwerk nach Anspruch 22 oder 23, **dadurch gekennzeichnet**, daß die eingeschlagenen Enden Verbindungsmaterial (V) und Futter (L) außerhalb der Führungsschlingen (FS) miteinander vernäht sind.

25. Verfahren zur Herstellung von Schuhwerk gemäß mindestens einem der vorausgehenden Ansprüche, bei dem der Schaft (S) mit einem Futter (L) ausgekleidet, und an den unteren Bereich des Schaftes (S) eine Kunststoffsohle (K) angespritzt wird, bei dem der im Kunststoffsohlen bereich befindliche untere Schaftbereich mittels einer Naht (N₂) mit einem porösen Material (V) vernäht wird, und bei dem flüssiges Kunststoffsohlenmaterial derart angespritzt wird, daß der flüssige Kunststoff das poröse Material (V) durchdringt,
**dadurch gekennzeichnet**
(a) daß das Futter (L) mit einer wasserdichten und wasserdampfdurchlässigen mikroporösen Funktionsschicht versehen wird
(b) daß das untere Ende des eigentlichen Schaftmaterials auf einen Abstand vom unteren Ende des Futters (L) gebracht und mit dem porösen Material als Verbindungsmaterial (V) verlängert wird,
(c) daß das Futter (L) und das vom eigentlichen Schaftmaterial abliegende Ende des porösen Verbindungsmaterials (V) an ihren unteren Enden über die Naht (N₂) miteinander vernäht werden, und
(d) daß dann die Kunststoffsohle (K) angespritzt wird.

26. Verfahren nach Anspruch 25, wobei das Schuhwerk mit einer sich mindestens über einen Teil der Schuhwerklänge erstreckenden Brandsohle (B) ausgerüstet wird, **dadurch gekennzeichnet**, daß vor dem Anspritzen des Kunststoffsohlenmaterials das untere Ende des porösen Verbindungsmaterials (V) mit dem Umfang der Brandsohle (B) vernäht wird.

27. Verfahren nach Anspruch 25, **dadurch gekennzeichnet**, daß das untere Ende von porösem Verbindungsmaterial (V) und Futter (L) mit Führungsschlingen (FS) für eine darin geführte Zugschnur (ZS) versehen werden, daß der untere Bereich von Verbindungsmaterial (V) und Futter (L) gemäß dem String-Lasting-Verfahren um einen Leisten herum eingezogen werden und daß dann an den eingezogenen Bereich des Verbindungsmaterials (V) und die mit einem Trennmittel versehene Unterseite des Leistens flüssiges Kunststoffsohlenmaterial gespritzt wird.

## Claims

1. Footwear comprising
(a) an upper (S),
(b) a lining (L) lining the upper (S),
(c) a waterproof plastics sole injection-molded to the lower portion of the upper (S),
(d) at least the lower portion of the upper (S) which is located in the region of the outsole being sewn via a seam (N2) to a porous material (V) adapted to be penetrated by the plastics sole material which is liquid during the injection molding operation,
characterized in
(e) that the lining (L) is provided with a microporous functional layer (M) which is waterproof and permeable to water vapor,
(f) that the upper material proper terminates at a distance from the lower end of the lining (L), and
(g) that the end of the upper material proper is connected via a porous connecting material (V) to the lower end of the lining (L),
(h) the porous connecting material (V) having one end sewn via a seam (N1) to the upper material (S) proper but not to the lining (L) and having the other end sewn via the seam (N2) to the lining (L).

2. Footwear according to claim 1,
characterized in that at least in the region of the seam (N2) connecting the upper (S) and the lining (L) a porous spacer (A) is secured between the upper (S) and the lining (L), said spacer being adapted to be penetrated by the plastics sole material which is liquid during the injection molding operation.

3. Footwear according to claim 2,
characterized in that the spacer (A) is secured at least by means of the seam (N2) joining upper (S) and lining (L).

4. Footwear according to at least one of claims 1 to 3,
characterized in that the porous connecting material (V) is additionally designed as a spacer.

5. Footwear according to at least one of claims 1 to 4,
characterized in that the porous connecting material (V) extends from the lower end of the lining (L) beyond the top edge of the plastics sole (K).

6. Footwear according to at least one of claims 1 to 5,
characterized in that the plastics sole (K) is permeable to water vapor.

7. Footwear according to at least one of claims 1 to 6,
characterized in that the material of the plastics sole (K) is selected from polyurethane, transparent caoutchouc and polyvinyl chloride.

8. Footwear according to at least one of claims 1 to 7,
characterized in that the lining is formed by a laminate (L) comprising a microporous functional layer (M) which is waterproof and permeable to water vapor, the side thereof that faces the upper material being provided with a mechanically protecting textile layer (T) and the side thereof that faces the inside of the footwear being provided with a mechanically protecting, selectively warming lining layer (F).

9. Footwear according to at least one of claims 1 to 8,
characterized in that the functional layer (M) consists of a membrane of expanded polytetrafluoroethylene, of polyester or of a microporous polyurethane coating.

10. Footwear according to at least one of claims 1 to 9,
characterized in that the upper (S) consists of a textile fabric or of a plastics fabric.

11. Footwear according to at least one of claims 1 to 10,
characterized in that the upper (S) consists of leather.

12. Footwear according to at least one of claims 1 to 11,
characterized in that the porous connecting material (V) connecting the upper (S) to the end of the lining (L) is a net of monofil synthetic fibers.

13. Footwear according to claim 12,
characterized in that the mesh aperture size is at least in the range of approx. 1.5 mm.

14. Footwear according to claim 12 or 13,
characterized in that the material of the net is selected from polyamide and polyester.

15. Footwear according to at least one of claims 12 to 14,
characterized in that the net is provided with an adhesive stiffening it.

16. Footwear according to at least one of claims 1 to 15,
characterized in that the lower end portions of the upper (S) and of the lining (L) are directed substantially perpendicular to the outsole bottom side.

17. Footwear according to at least one of claims 1 to 13,
characterized in that the lower end portions of the upper (S) and of the lining (L) are directed substantially parallel to the outsole bottom side and at least the portion of the upper (S) extending parallel to the outsole bottom side is formed by a porous connecting material (V).

18. Footwear according to at least one of claims 1 to 17,
characterized in that the lower end portions of the connecting material (V) and of the lining (L) are sewn to an insole (B) having the outsole (K) injection-molded to the bottom side thereof.

19. Footwear according to claim 18,
characterized in that in the insole (B) extends only across part of the length of the footwear according to the polypintch method.

20. Footwear according to claim 19,
characterized in that the insole (B) extends from the front end of the footwear approximately to the medial arch thereof.

21. Footwear according to claim 19 or 20,
characterized in that the lower end portions of the connecting material (V) and of the lining (L) are directed in accordance with claim 16 in the footwear portion not provided with the insole (B), and are directed in accordance with claim 17 in the portion provided with the insole (B).

22. Footwear according to at least one of claims 1 to 15 or 17,
characterized in that the lower end portions of the connecting material (V) and of the lining (L) are turned in according to the string lasting method and are provided at their turned-in ends with guide loops (FS) for a pull string (ZS).

23. Footwear according to claim 22,
characterized in that the turned-in ends of the connecting material (V) and the lining (L) are sewn to each other by means of the guide loops (FS).

24. Footwear according to claim 22 or 23,
characterized in that the turned-in ends of the connecting material (V) and the lining (L) are sewn to each other outside of the guide loops (FS).

25. A method of making footwear according to at least one of the preceding claims, in which the upper (S) is lined with a lining (L) and a plastics sole (K) is injection-molded to the lower portion of the upper (S), in which the lower portion of the upper (S) located in the region of the plastics sole is sewn to a porous material (V) by means of a seam (N2), and in which liquid plastics sole material is injection-molded in such a manner that the liquid plastics material penetrates the porous material (V),
characterized in
(a) that the lining (L) is provided with a functional layer which is waterproof and permeable to water vapor,
(b) that the lower end of the upper material proper is spaced from the lower end of the lining (L) and is extended with the porous material as connecting material (V),
(c) that the lining (L) and the end of the porous connecting material (V) remote from the upper material proper are sewn to each other at their lower ends via the seam (N2), and
(d) in that the plastics sole (K) is then injection-molded.

26. A method according to claim 25, in which the footwear is provided with an insole (B) extending at least across part of the footwear length,
characterized in that the lower end of the porous connecting material (V) is sewn to the periphery of the insole (B) prior to injection-molding of the plastics sole material.

27. A method according to claim 25,
characterized in that the lower ends of the porous connecting material (V) and of the lining (L) are provided with guide loops (FS) for a pull string (ZS) guided therein, that the lower portions of the connecting material (V) and of the lining (L) are pulled in around a last according to the string lasting method, and that liquid plastics sole material is then injection-molded to the pulled-in portion of the connecting material (V) and the bottom side of the last which is provided with a separating agent.

## Revendications

1. Chaussure comprenant
(a) une tige (S),
(b) une doublure intérieure (S) revêtant la tige (S)
(c) une semelle synthétique, imperméable à l'eau, injectée contre la région inférieure de la tige (S),
(d) dans laquelle la région inférieure de la tige qui se trouve dans la région de la semelle est cousue, au moyen d'une couture (N2), à une matière poreuse (V) qui peut être traversée par la matière de la semelle synthétique qui est liquide au moment de l'injection,
caractérisée
(e) en ce que la doublure (L) est munie d'une couche fonctionnelle (M) microporeuse, imperméable à l'eau et perméable à la vapeur d'eau,
(f) en ce que la matière proprement dite de la tige se termine à une distance de l'extrémité inférieure de la doublure (L) et
(g) en ce que l'extrémité de la matière proprement dite de la tige est assemblée à l'extrémité inférieure de la doublure (L) au moyen d'une matière d'assemblage (V) poreuse ;
(h) la matière d'assemblage poreuse (V) étant cousue, à une extrémité, à la matière proprement dite (S) de la tige au moyen d'une couture (N1) mais non pas à la doublure (L) et étant cousue, à l'autre extrémité, à la doublure (L) au moyen de la couture (N2).

2. Chaussure selon la revendication 1, caractérisée en ce qu'au moins dans la région de la couture (N2) qui assemble la tige (S) et la doublure (L) est fixée, entre la tige (S) et la doublure (L), un intercalaire poreux (A), qui peut être traversé par la matière de la semelle synthétique qui est liquide au moment de l'injection.

3. Chaussure selon la revendication 2, caractérisée en ce que l'intercalaire (A) est fixé au moins à l'aide de la couture (N2) qui assemble la tige (S) et la doublure (L).

4. Chaussure selon au moins une des revendications 1 à 3, caractérisée en ce que la matière d'assemblage poreuse (V) constitue en supplément un intercalaire.

5. Chaussure selon au moins une des revendications 1 à 4, caractérisée en ce que la matière d'assemblage poreuse (V) déborde au-delà de l'extrémité inférieure de la doublure (L) jusqu'au-delà du bord supérieur de la semelle synthétique (K).

6. Chaussure selon au moins une des revendications 1 à 5, caractérisée en ce que la semelle synthétique (K) est perméable à la vapeur d'eau.

7. Chaussure selon au moins une des revendications 1 à 6, caractérisée en ce que la matière de la semelle synthétique (K) est choisie parmi le polyuréthane, le caoutchouc transparent et le chlorure de polyvinyle.

8. Chaussure selon au moins une des revendications 1 à 7, caractérisée en ce que la doublure est formée d'un laminé (L) qui comprend une couche fonctionnelle (M) microporeuse, imperméable à l'eau et perméable à la vapeur d'eau, dont la face dirigée vers la matière de la tige est munie d'une couche textile (T) formant protection mécanique, et dont la face dirigée vers le volume intérieur de la chaussure est munie d'une couche de doublure (F), formant une protection mécanique et éventuellement chaude.

9. Chaussure selon au moins une des revendications 1 à 8, caractérisée en ce que la couche fonctionnelle (M) est composée d'une membrane faite de polytétrafluoréthylène étiré, de polyester ou d'une enduction de polyuréthane microporeuse.

10. Chaussure selon au moins une des revendications 1 à 9, caractérisée en ce que la tige (S) est composée d'un tissu textile ou synthétique.

11. Chaussure selon au moins une des revendications 1 à 10, caractérisée en ce que la tige (S) est faite de cuir.

12. Chaussure selon au moins une des revendications 1 à 11, caractérisée en ce que la matière d'assemblage poreuse (V), qui assemble la tige (S) à l'extrémité de la doublure (L) est un réseau de fibres synthétiques monofils.

13. Chaussure selon la revendication 12, caractérisée en ce que la dimension d'ouverture des mailles est d'au moins de l'ordre d'environ 1,5 mm.

14. Chaussure selon la revendication 12 ou 13, caractérisée en ce que la matière du réseau est choisie parmi une polyamide et un polyester.

15. Chaussure selon au moins une des revendications 12 à 14, caractérisée en ce que le réseau est muni d'un adhésif qui le raidit.

16. Chaussure selon au moins une des revendications 1 à 15, caractérisée en que la région d'extrémité inférieure de la tige (S) et celle de la doublure (L) sont orientées sensiblement perpendiculairement à la face intérieure de la semelle.

17. Chaussure selon au moins une des revendications 1 à 13, caractérisée en ce que la région d'extrémité inférieure de la tige (S) et celle de la doublure (L) sont orientées sensiblement parallèlement à la face inférieure de la semelle et au moins la région de la tige (S) qui s'étend parallèlement à la face inférieure de la semelle est formée par une matière d'assemblage poreuse (V).

18. Chaussure selon au moins une des revendications 1 à 17, caractérisée en ce que la région d'extrémité inférieure de la matière d'assemblage (V) et celle de la doublure (L) sont cousues à une première (B) contre la face inférieure de laquelle la semelle (K) est injectée.

19. Chaussure selon la revendication 18, caractérisée en ce que la première (B) s'étend seulement sur une partie de la longueur de la chaussure, selon la méthode connue sous la désignation de "polypintch".

20. Chaussure selon la revendication 19, caractérisée en ce que la première (B) s'étend de l'extrémité avant de la chaussure à peu prés jusqu'à la voûte médiane.

21. Chaussure selon la revendication 19 ou 20, caractérisée en ce que la région d'extrémité inférieure de la matière d'assemblage (V) et celle de la doublure (L) sont orientées selon la revendication 16 dans la région de la chaussure qui n'est pas munie de la première (B) et selon la revendication 17 dans la région munie de la première (B).

22. Chaussure selon au moins une des revendications 1 à 15 ou 17, caractérisée en ce que la région d'extrémité inférieure de la matière d'assemblage (V) et celle de la doublure (L) sont repliées conformément à la méthode de montage à la ficelle et munies, à leur extrémité repliée, de boucles de guidage (FS) prévues pour une ficelle de traction (ZS).

23. Chaussure selon la revendication 22, caractérisée en ce que les extrémités repliées de la matière d'assemblage (V) et de la doublure (L) sont cousues d'une à l'autre au moyen des boucles de guidage (FS).

24. Chaussure selon la revendication 22 ou 23, caractérisée en ce que les extrémités repliées de la matière d'assemblage (V) et de la doublure (L) sont cousues ensemble à l'extérieur des boucles de guidage (FS).

25. Procédé de fabrication de chaussures selon au moins une des revendications précédentes, dans lequel la tige (S) est revêtue d'une doublure (L) et une semelle synthétique (K) est injectée contre la région inférieure de la tige (S), et dans laquelle la région inférieure de la tige qui se trouve dans la région de la semelle synthétique est cousue à une matière poreuse (V) au moyen d'une couture (N2), et dans laquelle la matière liquide de la semelle synthétique est injectée de manière que la matière synthétique liquide traverse la matière poreuse (V),
caractérisée
(a) en ce que la doublure (L) est munie d'une couche fonctionnelle microporeuse imperméable à l'eau et perméable à la vapeur d'eau,
(b) en ce que l'extrémité inférieure de la matière proprement dite de la tige est placée à distance de l'extrémité inférieure de la doublure (L) et prolongée par la matière poreuse constituant la matière d'assemblage (V),
(c) en ce que la doublure (L) et l'extrémité de la matière d'assemblage poreuse (V) qui est éloignée de la matière proprement dite de la tige sont cousues l'une à l'autre à leurs extrémités inférieures par la couture (N2), et
(d) en ce que, ensuite, la semelle synthétique (K) est injectée.

26. Procédé selon la revendication 25, dans lequel la chaussure est équipée d'une première (B) qui s'étend sur au moins une partie de la longueur de la chaussure, caractérisée en ce que l'extrémité inférieure de la matière d'assemblage poreuse (V) est cousue à la périphérie de la première (B) avant l'injection de la matière de la semelle synthétique.

27. Procédé selon la revendication 25, caractérisée en ce que l'extrémité inférieure de la matière d'assemblage poreuse (V) et celle de la doublure (L) sont munies de boucles de guidage (FS) prévues pour une ficelle de traction (ZS) guidée dans ces boucles, en ce que la région inférieure de la matière d'assemblage (V) et celle de la doublure (L) sont repliées autour d'une forme, conformément au procédé de montage à la ficelle et en ce qu'ensuite la matière liquide de la semelle synthétique est injectée contre la région repliée de la matière d'assemblage (V) et contre la face inférieure de la forme, qui est munie d'un agent de démoulage.
